# EUROPEAN PATENT SPECIFICATION

(11) **EP 2 834 880 B1**
(45) Date of publication and mention of the grant of the patent: **10.06.2020**
(21) Application number: 12714284.2
(22) Date of filing: 02.04.2012
(51) Int. Cl.: H01Q 1/22, H01Q 7/00, G06K 19/077, H01Q 21/28, A63B 24/00, A63B 43/00, G06K 7/10, A63B 63/00

(54) **ANTENNA SYSTEM FOR DETERMINING A TRANSIT OF A MOVING OBJECT THROUGH AN AREA OF INTEREST**
ANTENNENVORICHTUNG ZUR BESTIMMUNG EINES DURCHGANGS EINES BEWEGTEN OBJEKTS DURCH EINEN INTERESSENBEREICH
SYSTÈME D'ANTENNE POUR DÉTERMINER UN TRANSIT D'UN OBJET EN MOUVEMENT À TRAVERS UNE ZONE D'INTÉRÊT

(43) Date of publication of application: 11.02.2015
(73) Proprietor: Fraunhofer-ges. zur Förderung der Angewandten Forschung E.V., 80686 München (DE)
(72) Inventor: HARTMANN, Markus, 92237 Sulzbach-Rosenberg (DE); BRETZ, Ingmar, 93128 Regenstauf (DE); BERNHARD, Josef, 92507 Nabburg (DE); ESKILDSEN, Jørn, DK-7160 Torring (DK)
(74) Representative: 2SPL Patentanwälte PartG mbB
(86) International application number: PCT/EP2012/056007
(87) International publication number: WO 2013/149649

(56) References cited:
- EP-A2- 0 227 453
- EP-A2- 0 337 783
- WO-A1-00/47291
- WO-A1-2006/094508
- GB-A- 2 001 250
- US-A1- 2007 299 625

## Description

### Background

Embodiments of the present invention relate to an antenna system for determining a transit of a moving object through an area of interest within a detection plane and to a method for determining said transit.

Applications, where objects are monitored with respect to their movement are numerous, as for example in sports games. Sports games, such as for example soccer, football, handball, ice hockey, hockey or the like employ rules where one participating party scores when an object, such as a ball or the like, crosses a predetermined detection plane, as for example the open front face of a goal in soccer. The question whether the ball completely passed the plane bordering the goal is of utmost importance to conclude whether the score has been achieved or not. Traditionally, that decision has been taken by a referee from a visual observation. Especially in scenarios where the ball moves into the direction of the goal and is returned quickly by the goal keeper, it is difficult to determine, whether the ball entered completely into the goal, which is whether the ball moved completely through the detection plane.

Apart from camera-based optical systems, some approaches propose to detect the transition of the ball through a detection plane using electromagnetic fields and/or signals derived therefrom. Some proposed systems provide magnetic fields of different direction on opposite sides of the detection plane together with sensors within the moving object or the ball under observation. That is, a sensor within the object monitors the magnetic field and determines that it passed through the detection plane when the orientation of the magnetic field has changed. In that event, the moving object or a sender contained therein transmits the information that the moving object detected transition through the detection plane to a receiver circuit such as to be able to indicate whether the ball was fully inside the volume of the goal or not.

Other systems utilize two antenna loops on each side of the detection plane, wherein each antenna loop receives a high-frequency signal with opposite phase such as to provide magnetic fields cancelling each other out in the detection plane in the middle between the two loops. A third receive antenna loop is deployed at this position in order to receive the field disturbance of a moving object passing through the set-up such as to be able to conclude, on occurrence of a signal on the receive antenna loop, that a ball or a moving object passed the plane of the receive antenna loop.

In order to provide or to receive the magnetic field used for the detection, those systems utilize antenna loops fully encircling the area of interest within the detection plane, such as for example the open mouth of a soccer goal in order to provide a field of precisely predetermined geometry. By relying on the precise generation of a magnetic field of predetermined geometry, in particular with respect to the detection plane where a disappearing magnetic field is required, those systems suffer from a decreased spatial resolution, since the generation of such a precise field configuration over large areas is hardly feasible.

Document WO2006094508 (A1) discloses a system detection of whether a movable object, such as a sports object, e.g. a football or an ice hockey puck, has passed goal plane. It is assumed to be known to encircle the goal plane with conductors to produce an electromagnetic field to excite signal emitter means in the movable object, alternatively detect the signal emitted by the emitter means. According to document WO2006094508 (A1), these circuits are sectioned into a plurality of separate circuits, which provides an improved spatial resolution of the system in particularly when the movable object is close to the conductors.

Document WO0047291 (A1) proposes an apparatus for detecting the position of an object relative to a plane, comprising at least one energising coil and at least one detecting coil, the coils being arranged so that as an object moves relative thereto it affects the detected signal; and phase sensing means for detecting signal variation and indicating the presence or position of the object. The apparatus is arranged so that a detectable phase reversal occurs as the object crosses the plane.

Document GB 2 001 250 A relates to an apparatus for registering a chance event and particularly to apparatus for monitoring a boundary area which is marked out in a space by a boundary line, in respect of objects which cross the boundary line. Monitoring boundary lines gives rise to difficulties particularly when various objects pass across the boundary line, but of such objects only a given object which is to be identified accordingly is to be selectively singled out and registered.

That is, there is a desire to provide an antenna system and a method for determining the transit of a moving object through an area of interest within a detection plane having a better characteristic.

### Summary

The invention is defined by the independent claims. Further aspects of the invention are outlined in the dependent claims. Embodiments which do not fall within the scope of the claims do not describe part of the present invention.

An antenna system comprises at least one loop antenna for receiving the electromagnetic field, the at least one loop antenna comprising one or more antenna loops arranged only within an antenna plane which is perpendicular to the detection plane. That is, a loop antenna is utilized to detect a magnetic field component of an electromagnetic field wherein the orientation of the loop antenna, that is the area bordered by the conductors of the antenna loops is perpendicular to the detection plane. By utilizing such a loop antenna, the an antenna is sensitive to a field component of the magnetic field emitted by the moving object which is parallel to the detection plane. The at least one loop antenna comprises a first signal path and a second signal path symmetrical to the detection plane, the first and second signal paths splitting at a first terminal and summing up at second terminal, the first signal path comprising a first conductor segment extending in parallel to the detection plane and the second signal path comprises a second conductor segment extending in parallel to the detection plane. A ground loop signal path s connected to the terminals of the at least one loop antenna such as to close a conductive loop enclosing the detection plane to generate an exciting electromagnetic field, wherein an excitation signal in the conductive loop is split at the first terminal and summed up at the second terminal to use the first signal path and the second signal path of the at least one loop antenna for the generation of the exciting electromagnetic field which is configured to excite the moving object to the emission of the magnetic field. The first terminal is situated between a first coil being part of the first signal path and a second coil being part of the second signal path, the first coil and the second coil having windings of opposite orientation; wherein a transformer comprising said first coil and said second coil further comprises a third coil coupled to the first coil and the second coil such that essentially no current is induced in the third coil when a current through the first coil and the second coil is essentially equal. Embodiments further comprise a signal terminal comprise a first signal terminal coupled to a first side of the third coil and a second signal terminal coupled a different second side of the third coil for providing a receive signal, the receive signal comprising information on a position of the moving object.

### Brief description of the Figures

Some embodiments of apparatuses and/or methods will be described in the following by way of example only, and with reference to the accompanying figures, in which
Fig. 1 shows a schematic view of a goal of a soccer field having mounted thereto an embodiment of an antenna system;
Fig. 2 shows a sideview of a section of the antenna system as attached to the goal;
Fig. 3 shows an example of idealized signal characteristics of an excitation signal and a receive signal;
Fig. 4 shows a perspective view of an embodiment of an antenna system as mounted to a goal;
Fig. 5 shows a schematic view of a goal equipped with an embodiment of an antenna system and an illustration of the determined receive signals;
Fig. 6 shows a more detailed view of the signals as generated when the ball transits through the detection plane in the embodiment of Fig. 5;
Fig. 7 shows a circuit diagram of an embodiment of an antenna system;
Fig. 8 shows an implementation of a calibration signal generator for generating a calibration signal;
Fig. 9 shows a flow chart of an embodiment of a method according to the present invention; and
Fig. 10 shows an embodiment of a sports equipment operable to emit an electromagnetic field according to the present invention.

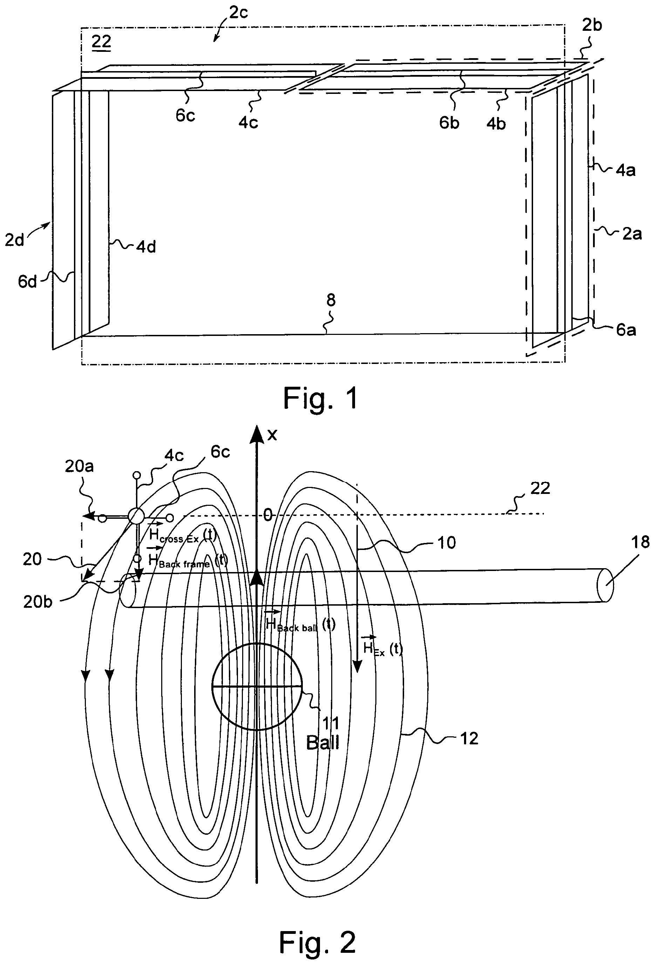

Fig. 1 shows a schematic view of a goal, e.g. of a soccer game, having mounted thereto four antenna systems 2a-d according to an embodiment of the present invention. Although the goal is enclosed by four antenna systems in Fig. 1, further embodiments may also utilize different amounts of antenna systems. For example, in a further embodiment, only one antenna system may be used, either at one of the posts of the goal or at the top bar of the goal. In the embodiment of Fig. 1 the antenna system serves to determine the transit of a ball through an area of interest within a detection plane. In the configuration of Fig. 1, the detection plane is the plane perpendicular to loop antennas 4a-d of the antenna systems 2a-d and, therefore, parallel to the open front face of the goal.

As elaborated on in the following description of Figs. 2 to 6, the loop antennas 4a-d are the antennas used for the detection of the crossing or of the transit of the ball 11 through the detection plane. Therefore, the loop antennas 4a-d may also be denoted as goal line antennas. The embodiments of Fig. 1 further comprise a further loop antenna 6a-d in each of the antenna systems 2a-d, which comprises one or more antenna loops arranged only within a further antenna plane which is perpendicular to the antenna plane of the loop antennas 4a to 4d and parallel to the detection plane 22. These further loop antennas may serve to derive an information whether the ball passed through the detection plane 22 inside the goal or outside of the goal. Therefore, the further loop antennas 6a-d may also be denoted as frame antennas. In other words, the frame antennas serve to define an area of interest within the detection plane, in order to be able to conclude, whether the ball crossed the detection plane within the area of interest. Therefore, the further loop antennas 6a-d are situated at the border of the area of interest, that is, at the goal posts.

Fig. 1 further illustrates schematically a ground loop signal path 8, which serves to connect first and second terminals of the loop antennas 4a-d such as to close a conductive loop in order to generate an exciting electromagnetic field as illustrated in Fig. 2. That is, the ground loop signal path 8 closes the electrical circuit in order to enable the generation of the exciting electromagnetic field with the loop antennas 2a-d.

Although the embodiments illustrated herein utilize the loop antennas 4a-d to also generate the exciting electromagnetic field by applying an excitation signal to said loop antennas 4a-4d, further embodiments may utilize a separate excitation loop in order to provide the exciting electromagnetic field.

In the following, the operating principles of the antenna system and of the determination of the presence of a crossing or of a transit of a moving object through the area of interest within the detection plane 22 will be explained together with the discussion of Figs. 2 to 6.

With an antenna system according to the present invention, an exciting electromagnetic field which has filed lines of the magnetic component that cross the detection plane 22 essentially perpendicular to the detection plane 22 may be generated. The exciting electromagnetic field 10 or, to be more precise, its magnetic component is only illustrated schematically by indicating the direction of a single field line 10 in Fig. 2.

Utilizing a moving object 11 emitting a magnetic field 12 as illustrated in Fig. 2, the magnetic component 12 of the electromagnetic field is received by means of the loop antennas 4a-d. Fig. 2 assumes the moving object 11 to be a ball of sports game which emits the magnetic field 12 as illustrated by the shown field lines. This may in principle be achieved by using an object 11 or a ball which is actively sending a magnetic field 12.

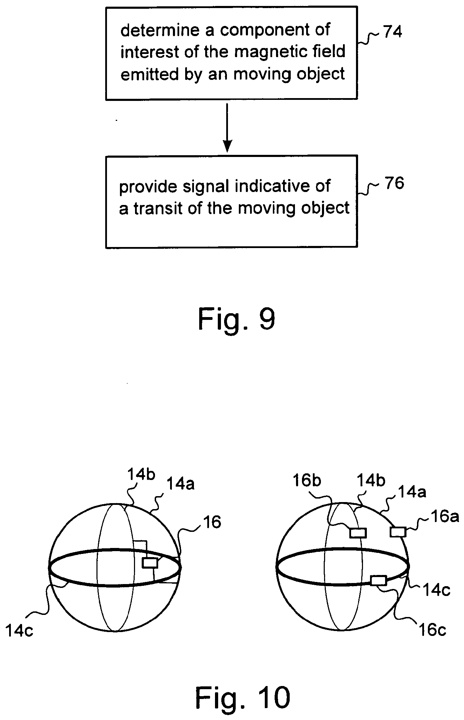

The embodiments described in the Figs, however, utilize a ball 11 or a moving object which is excited by the exciting electromagnetic field 10 as generated by the loop antennas 4a-d to emit the magnetic field 12. To this end, a ball or a moving object 11 as shown in Fig. 10, left illustration, may be utilized, which comprises three loop antennas 14a-c being arranged in a pairwise perpendicular orientation with respect to each other. The three loop antennas 14a-c are connected in series with each other and with a resonator 16, the resonator 16 having a resonance frequency corresponding essentially to the frequency of the exciting electromagnetic field 10. That is, the object has three perpendicular coils 14a-c with a resonance frequency corresponding to the frequency of the exciting electromagnetic field 10. When such a ball or object 11 approaches the goal or the antenna system 2a-d, the coils 14a-c inside the ball 11 are stimulated by the exciting electromagnetic field 10. That is, a current is induced in the loop antennas 14a-c. Due to the resonance frequency of the resonator of the moving object 11 and the corresponding frequency of the exciting electromagnetic signal 10, the received energy is stored in the resonant circuit or in the resonator 16 of the moving object, e.g. in a capacitor used therein. The oscillation in the resonator or the stored energy is then generating a magnetic field in the coils 14a-c of the moving object 11 itself, having field lines 12 with a direction opposite to the direction of the field lines of the exciting electromagnetic field 10.

According to further embodiments, the moving object comprises three loop antennas or coils 14a-c which are being arranged in a pairwise perpendicular orientation with respect to each other and which are not connected in series, as indicated by the right illustration in fig. 10. Each loop antenna or coil 14a-c forms an independent resonator which further comprises an associated capacitance 16a-c being connected in series or in parallel. Each of the three so provided resonant circuits is tuned to the frequency of the exciting electromagnetic field 10 by choosing the capacitances and the inductances of the loops of each circuit appropriately.

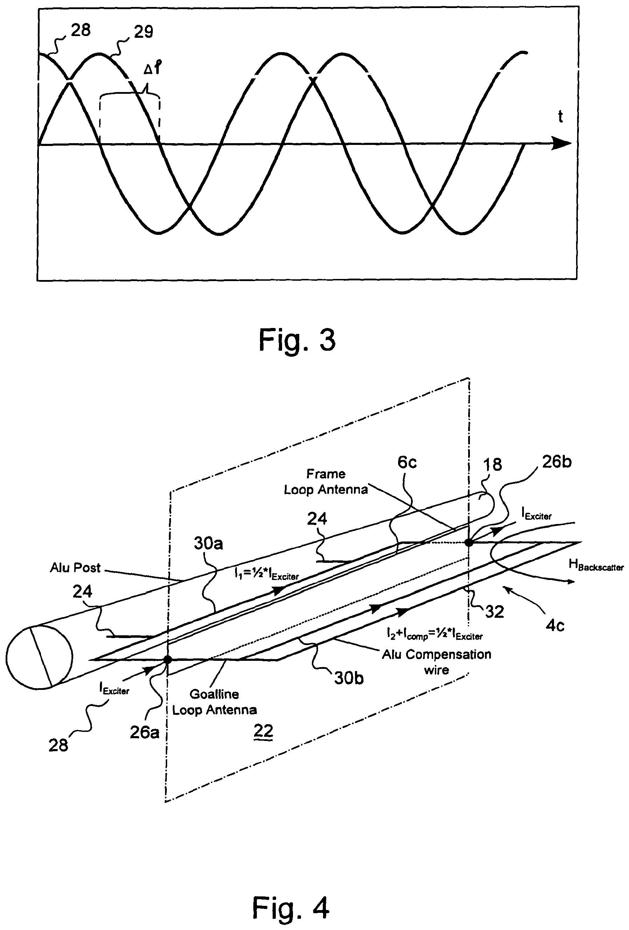

Due to the properties of the resonator, the magnetic field 12 emitted by the moving object 11 is delayed with respect to the exciting electromagnetic 10 field by a time corresponding to a phase shift of 90° (π/2). This stimulation of the emission of a magnetic field 12 is also utilized in Radio Frequency Identification systems (RFID) in order to transmit information from objects not having embodied own energy sources. In RFID, the excited emission of a magnetic field 12 as illustrated in Fig. 2 is also known as "backscattering". The backscattered or emitted magnetic field 12 of the moving object 11 is, amongst others, received by the loop antenna 4c which is mounted behind a goal post or a bar 18 of a goal. While the loop antennas 4a-d of the antenna systems illustrated in the Figs. do only comprise one single antenna loop formed by a conductor, further embodiments may also utilize loop antennas having more loops. Fig. 3 illustrates an idealized phase relation between an excitation signal 28 used to generate the exciting electromagnetic field 10 and a receive signal 29 as it may be received at a signal terminal of the loop antenna 4c.

Utilizing a moving object 11 as, for example the one illustrated in Fig. 10 leads to a field configuration of the magnetic field 12 emitted by the moving object 11 as illustrated in Fig. 2. This is due to the cause that the individual electromagnetic fields emitted by the three loop antennas 14a-c superimpose with each other such as to arrive at the field configuration of Fig. 2. One exemplary field strength vector 20 of the emitted magnetic field 12 is illustrated in Fig. 2, which is composed of a first component 20a in parallel to the detection plane 22 as well as of a second component 20b perpendicular to the detection plane 22. Due to its orientation, the loop antenna 4c is sensitive to the first component 20a, which is, therefore, also denoted as the goal line part, whereas the second component 20b is also denoted as the frame part of the field strength vector 20 (H_{back},_{ball}).

In other words, the backscatter signal of the moving object 11 or the ball is inducing a current into the loop antenna 4c and the further loop antenna 6c of the antenna system 2c. The further loop antenna 6c is only illustrated schematically and for the sake of completeness in Fig. 2. The backscattered or received signal can be split into a frame part 20b and a goal line part 20a. Depending on the position of the ball, the orientation of the H-field vector 20 of the backscatter signal is changing. As soon as the ball is passing the detection plane 22 at the center of the loop antenna 4c, the first component 20a of the field strength vector (H_{back,goal}) is crossing zero and the signal waveform is inverted. That is, a phase condition of the receive signal changes according to a predetermined condition. The predetermined condition is, according to the embodiment of Figs. 2 to 6, that the signal waveform is inverted and that the phase undergoes a change of 180°. Once a phase inversion or a phase shift of 180° occurs or is determined by evaluation of the receive signal provided by the antenna system 2c, in particular by the loop antenna 4c, a goal can be assumed, since the center of the ball or of the moving object 11 crossed the line of symmetry of the two signal paths of the loop antenna 4c, that is the detection plane 22. However, at the time of the crossing, the overall field strength of the exciting electromagnetic field 12 is at maximum and, therefore, the emission of the magnetic field 12 of the moving object is maintained, increasing the achievable precision in the determination of the transit of the object 11 as compared to alternative approaches, where the exciting electromagnetic field within the detection plane 10 is tuned or adjusted to be zero.

Utilizing an antenna system according to an embodiment of the present invention, therefore, allows to determine the occurrence of a goal, that is, the fact that the complete ball 11 was, at any time instance, completely behind the goal line, with highest precision.

For the detection of a goal in a soccer game, the antenna system 4c may comprise a mounting structure operable to mount the antenna system to a support structure or to the goal such that the detection plane 22 has a distance equaling half a diameter of a soccer ball to the front face of the goal. In order to provide a more flexible solution, the mounting structure may be adjustable to fit different designs of goals, such as to be able to adjust the predetermined distance to the requirements. Fig. 4 shows a perspective view of the configuration illustrated in Fig. 2, wherein an embodiment of a mounting structure 24 adapted to mount the antenna system comprising the loop antenna 4c and the further loop antenna 6c to the aluminum bar 18 of a goal is illustrated schematically.

As further illustrated in Fig. 4, the loop antenna 4C comprises a first terminal 26a and a second terminal 26b in order to receive the excitation signal 28 for the loop antenna 4c, which allows providing said excitation signal 28 to the loop antenna. As illustrated in more detail in Fig. 4, the excitation signal 28 of alternating current is split and transferred (propagates) from the first terminal 26a to the second terminal 26b via a first signal path 30a as well as via a second signal path 30b. That is, both conductors of the loop antenna 4c which extend in parallel to the detection plane 22 participate in the generation of the exciting electromagnetic field 10. According to the embodiment of Fig. 4, the further loop antenna 6c, that is, the frame antenna, does not participate in the generation of the electromagnetic field 10. However, further embodiments may also utilize the further loop antenna 6c for the generation of the exciting electromagnetic field 10.

Fig. 4 further illustrates a compensation signal path 32, which is coupled to the second signal path 30b and which serves to balance the loop antenna 4c. In alternative embodiments, the compensation signal path 32 may, of course, also be coupled to the first signal path 30a. The compensation signal path 32 has adjustable coupling characteristics with respect to the second signal path 30b. This may be utilized to compensate for field components generated by eddy currents in metallic posts such as for example in the aluminum post 18 illustrated in Fig. 4. The eddy currents may, for example, be generated by the current in the first signal path 30a and, hence, induce a current into the loop antenna 4c which is not caused by the moving object and, therefore, undesirable. By means of the compensation signal path 32, or, more generally, by using a compensation signal generator within the antenna system 2c, such signal components may be compensated so that the antenna is balanced, that is, one of the signal paths 30a or 30b carries half of the current of the excitation signal 28, while the other signal path, possibly together with the compensation signal path 32 or with the compensation signal generator carries the other half of the current, such that no signal as induced in the loop antenna 4c without the presence of the moving object 11 in the proximity of the loop antenna 4c. To this end, the loop antenna is tuned such that the both signals carrying half of the current each, are in phase.

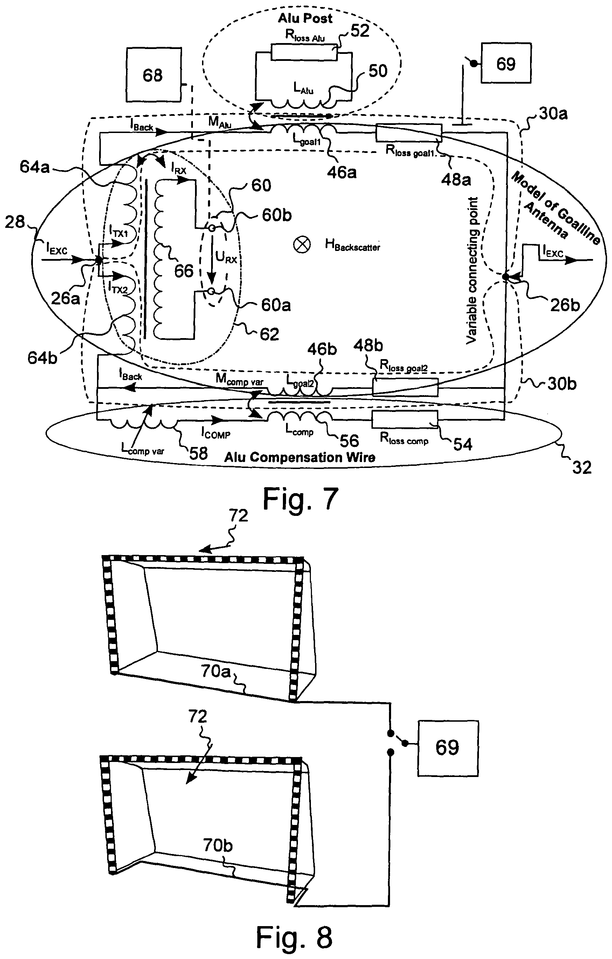

Fig. 4 shows one particular possibility to implement a compensation signal generator by using a compensation wire having an adjustable distance to the wire of the second signal path 30b and/or an adjustable inductance so that the antenna can be balanced by adjusting the distance and/or the inductance once the antenna is mounted to the support structure or to the goal. A further possibility to implement a compensation signal generator would, for example, be to add a symmetric metal or aluminum part on the other side of the antenna system 2c such as to provide a symmetric configuration in which the eddy currents of the different metal bars compensate each other. A further possibility to implement a compensation signal generator would, for example, be to induce a current into the loop antenna 4c or into one signal path of the loop antenna 4c with an appropriately adjusted amplitude and phase generated such that the influence of the eddy current is compensated for. The induction of this additional compensation signal could, for example, be performed by means of a further transformer or the like. However, when using a compensation signal path 32 or a compensation wire as illustrated in Fig. 4, and, in more detail in Fig. 7, no further active signal path is necessary and, hence, the antenna system remains simple and reliable.

Apart from the use of the compensation signal generator or the compensation signal path 32, the antenna system design is also highly efficient in avoiding cross-talk or undesired signal components as compared to other solutions employing an additional independent loop for the generation of the exciting electromagnetic field 10. Using an additional loop may generate cross-talk signals in the loop antenna 4c of the antenna system 2c which might cover the magnetic field 12 of the backscatter signal of the moving object 11. This would decrease the accuracy of the detection of the occurrence of a goal significantly. However, utilizing the loop antenna to create the exciting electromagnetic field as in the embodiments described in the Figs. avoids the occurrence of cross-talk signals due to the particular generation of the exciting electromagnetic field 10.

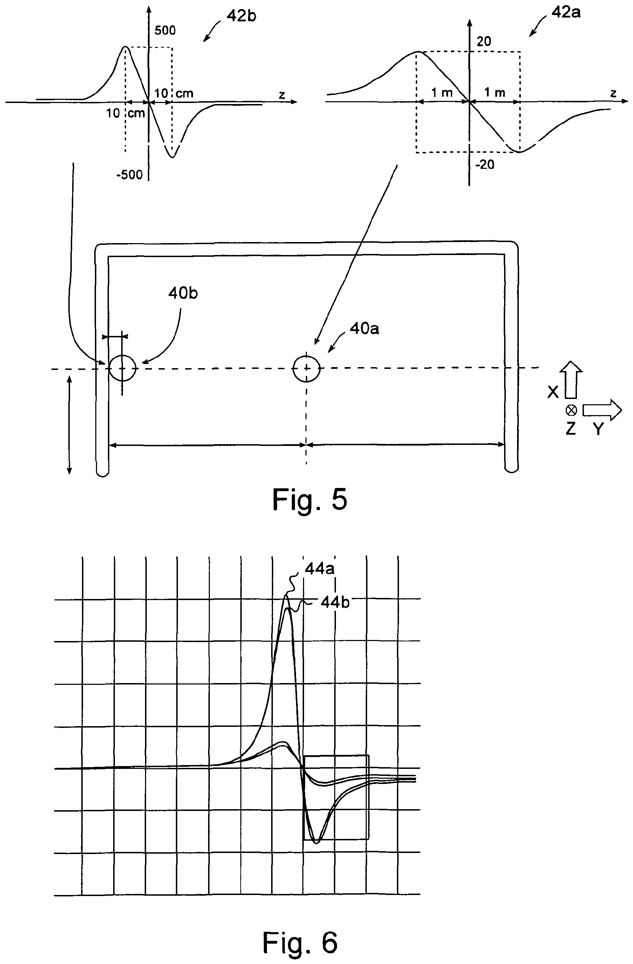

Fig. 5 shows, by way of example, two receive signals 42a and 42b as they may be received by the loop antenna of Fig. 4c when a ball passes a detection plane of a goal such that a score is achieved in a soccer or handball game or the like. Fig. 5 schematically shows a goal and the receive signals 42a and 42b resulting from two different positions where a ball passes the detection plane. The first position 40a is essentially in the center of the goal while the second position 40b is close to a post of the goal. The coordinate system is chosen to be such that the X direction is the direction from the bottom to the top bar of the goal, while the Y direction extends from the left to the right and the Z direction is perpendicular to the paper plane, that is, perpendicular to the detection plane, which is parallel to the plane of the open face of the goal.

The two signal characteristics of receive signals 42a and 42b as determined by an embodiment of the antenna system are shown on top of the goal 18. The geometry is chosen such that the plane having a Z-coordinate of zero corresponds to the detection plane. As already explained in the preceding paragraphs, a receive signal 42a and 42b as determined by some antenna systems according to the present invention undergoes a phase change, that is, crosses zero when the ball crosses or passes through the detection plane. Although the amplitudes of the receive signals 42a and 42b and the distance to the detection plane that corresponds to the occurrence of a detectable receive signal (in terms of a significant amplitude produced by the moving object) may differ significantly, it becomes apparent, that irrespective of the position where the ball passes through the detection plane, the phase change precisely occurs at the position of the detection plane. This is particularly due to the geometry of the loop antennas 4a-d of the antenna system, in particular due to their orientation with respect to the detection plane and due to the generation of the exciting electromagnetic field by the loop antennas. Therefore, the reliable detection of a goal can be achieved over the complete area of interest, in particular, since a phase change, that is, the change of a phase condition of 180° (a change in sign of a particular quantity) can be sensed with high precision.

Fig. 6 illustrates a particular implementation as to how the detection of the phase change may be performed, which additionally allows to cancel long-term effects such as temperature- induced drifts of the system or the like. In principle, the receive signals as received at signal terminals of the loop antenna may be provided to or fed to a receiver circuit, where the backscatter signal, that is, the received signal as caused by the magnetic field 12 of the moving object 10, is down- converted coherently to a complex baseband signal. The down conversion results in a complex valued vector for the receive signal. The vector of the receive signal may be compared to the signal vector of the excitation signal used to generate the exciting electromagnetic field. As illustrated in Fig. 3 for an ideal configuration, the phase shift Δϕ between the two vectors is 90°. However, due to differing cable length, variations and run times in the receiver circuits or similar influences, the phase shift will in general be different from 90°. The amplitude of the complex vector representing the received signal is dependent on the position of the ball, in particular, on the distance of the ball with respect to the detection plane. As indicated already in Fig. 5, however, a phase inversion occurs when the ball passes the detection plane or the goal line.

In the goal detection algorithms, the imaginary and real parts of the complex valued baseband signal may be processed separately. That is, an algorithm used to detect the transit of a moving object 11 through the detection plane 22 may search for a zero crossing point, that is, for a configuration where the complex valued vector crosses zero due to the change of the phase condition. In order to suppress noise effects, it may additionally be verified, whether an amplitude peak above a certain minimum threshold occurred right before the phase change or the zero crossing point. Also in order to avoid wrong detections caused by long-term drifts of the whole system, further embodiments of the present invention may utilize two different frequencies. One frequency of an excitation signal used for the generation of the exciting electromagnetic field 10 corresponds to the resonance frequency of the resonator 16 of the moving object 11 while a further frequency is slightly below or above the resonance frequency. Therefore, the moving object or the ball is less sensitive to the second frequency which results in an emitted magnetic field inducing a receive signal of a lower amplitude as compared to the receive signal caused by the excitation signal at the resonance frequency. Drift effects, however, influence both receive signals identically and a difference between the two signal amplitudes remains the same, when changes are induced by drift effects. Hence, those changes may be identified and compensated for. If, however, a ball is approaching the goal or the detection plane 22, the difference between both signals decreases and drops to zero when the ball crosses the detection plane 22 which allows for a discrimination against drift effects.

Further embodiments avoid wrong determinations of goals by summing up the signal of the loop antenna 4c and of the further loop antenna 6c, that is, of the goal line antenna and the frame antenna to derive a complex vector indicating an orientation of the field generated or emitted by the ball 11 and hence an indication of the position of the ball with respect to the antenna system. In particular, using estimations of field vectors as determined by multiple antenna systems may provide for the possibility to estimate the position of the ball. This information may be furthermore used as a consistency check in order to avoid wrong detections of goals caused by noise or long-term drift effects.

Fig. 6 shows, for the two receive signals 42a and 42b illustrated in Fig. 5, the effect of using excitation signals of slightly differing frequency in order to generate the exciting electromagnetic field 10. The response, that is, the receive signal caused by the electromagnetic field, excited with the resonance frequency is shown in a first graph 44a, while the receive signal caused by an excitation signal with slightly different frequency is illustrated by a second graph 44b. As illustrated in Fig. 6, the two signals show the signal characteristics elaborated on above and hence allow to avoid wrong detections of goals.

Fig. 7 shows a circuit diagram of an embodiment of the present invention, showing the individual components of an antenna system 2c according to an embodiment of the present invention and the coupling to its environment.

For the simplicity of the illustration, only the loop antenna 4c is illustrated in Fig. 7, while the further loop antenna 6c, that is the frame antenna, is not shown, since this antenna need not be balanced or compensated with the same precision as the goal line antenna 4c. The loop antenna comprises the first signal path 30a and the second signal path 30b. The transmission properties of the first and second signal paths 30a and 30b are illustrated by corresponding first and second inductances 46a and 46b as well as by corresponding first and second resistances 48a and 48b. As already mentioned before, the excitation signal 28 is split at the first terminal 26a such as to utilize both signal paths 30a and 30b for the generation of the exciting electromagnetic field 10. The signal of both signal paths 30a and 30b is summed up at the second terminal 26b where the current source providing the excitation signal 28 connects. The influence of metallic post of a goal or the like is modelled by the inductive coupling between an inductance 50 of the aluminum post which is connected in series to an associated resistance 52. In order to compensate for the influence of the post the antenna system illustrated in Fig. 7 incorporates a compensation signal path 32, connected in parallel to the second signal path 30b. The compensation signal path 32 has associated thereto an inherent resistance 54 and an inherent inductance 56. A distance between the compensation signal path 32 and the second signal path 30b may, according to some embodiments, be adjustable in order to compensate for the influence of the eddy currents in the aluminum post. According to further embodiments, the compensation signal path 32 may furthermore comprise a variable inductance 58, such as to be able to compensate the influence of the aluminum post or of other influences more precisely. In other words, an additional wire may be used, which is running or extending in parallel to the second signal path 30b of the antenna loop 4c and which builds a coupling circuit (L_{goal2}, L_{comp}, M_{com,var}). By changing the distance between the compensation wire and the antenna loop 4c, the coupling factor M_{comp,var} can be adjusted. In addition or alternatively, a variable inductor 58 or a variable capacitance may be implemented into the compensation path 32. The two variable elements L_{comp,var} and M_{comp,var} may be tuned in a way that both sides of the loop, that is, the first signal path 30a at the first side of the detection plane 22 and the second signal path 30b in combination with the compensation signal path 32 at the opposite side of the detection plane 22 are balanced. That is, in the balanced situation, I_{TX1} = I_{TX2} = 1/2^{∗}I_{exc}, with the current signals being in phase.

The loop antenna 4c furthermore comprises a signal terminal 60 comprising a first signal terminal 60a and a second signal terminal 60b in order to provide the receive signal of the loop antenna 4c. The receive signal is coupled out of the loop antenna 4c by means of a transformer 62. The transformer 62 is formed by a first coil 64a and a second coil 64b as well as by a third coil 66. The first coil 64a is part of the first signal path 30a and the second coil 64b is part of the second signal path 30b, wherein the first terminal 28 is situated between the first and second coils 64a and 64b. The first and second coils 64a and 64b are, however, wound with different orientations, that is, the third coil 66 is coupled to the first and second coils 64a and 64b such that essentially no current is induced in the third coil 66 when the current through the first and second coils 64a and 64b is essentially equal, that is, when the antenna is balanced. Therefore, in the situation of a balanced antenna, no current is induced in the third coil 66 and hence no significant receive signal is provided at the first and second signal terminals 60a and 60b when the moving object is not present or close.

In order to be able to perform the above discrimination of the receive signal 29 and hence the determination of a transit of the ball 11 through the detection plane 22, however, knowledge on a phase relation between the excitation signal 28 and a receive signal 29 as provided at the signal terminals 60a and 60b may be desirable. Arbitrary amplitude and phase distortion may be employed due to a delay in the antenna cables or in the receiving path of a receiver coupled to the signal terminal 60. These may need to be compensated. In the desirable configuration of a fully-balanced antenna system, however, no signal is present at the signal terminals 60a and 60b which may be utilized for the determination of the phase relation.

In order to provide for the possibility of such a calibration, further embodiments of the present invention optionally comprise a calibration signal generator 69 which is operable to modify the characteristics of the antenna system such that a signal is generated at the signal terminals 60a and 60b.

According to some embodiments, this may be achieved by switchable tuning elements in one of the first or the second signal paths 30a or 30b to intentionally bring the antenna out of balance. Examples of those tuning elements may be additional inductors or coupling elements which can be switched on and off by means of relays or transistor circuits. That is, according to some embodiments, the calibration signal generator 69 may comprise a calibration circuit being coupleable to the first or the second signal path 30a or 30b on demand.

According to another embodiment of the present invention, however, the calibration signal generator 69 allows to change the configuration of the circuitry used to generate the exciting electromagnetic field 10 such that the changed exciting electromagnetic field 10 induces a minor amount of current into the loop antenna 4c and, optionally, also in the further loop antenna 6c (the frame antenna). Different exciter loop configurations may be changed by means of a relay or transistor circuitry, which is capable of switching between at least two different configurations. According to the embodiment of Fig. 8, the calibration signal generator 69 is operable to select one of two different ground loop signal paths 70a and 70b. In the configuration of the first ground loop signal path 70a, the field vector 72 of the magnetic component of the exciting electromagnetic field 10 as created by the loop antenna 4c is, at the detection plane 22, perpendicular to said detection plane 22 and, therefore, no signal is induced into a balanced loop antenna 4c. In the second configuration, as illustrated in the lower illustration of Fig. 8, however, a second ground loop signal path 70b is chosen such that the field vector 72 is slightly inclined and, hence, a signal is induced in the loop antenna 4c. The so induced signal may be utilized to determine the phase relation between the exciting signal 28 and the receive signal 29.

The antenna system of Fig 7 further comprises a signal evaluator 68 coupled to signal terminal 60 of the antenna system to evaluate the receive signal and to determine a signal indicative of the position and/ or transit of the moving object through the detection plane 22.

Fig. 9 illustrates schematically a flow diagram for a method for determining a transit of a moving object through an area of interest within a detection plane according to an embodiment of the present invention. The moving object emits a magnetic field, for example by backscattering using a configuration shown in Fig. 10. In a determination step 74, a component of interest of the magnetic field is determined, wherein the component of interest is parallel to the detection plane 22.

In a providing step 76, a signal on the transit of the moving object through the area of interest is provided, when a phase condition of the observed component of interest changes according to a predetermined condition.

Fig. 10 shows an embodiment of sports equipment or a sensor configuration to be used with an antenna system according to any of the embodiments of the present invention which emits a magnetic field 12 used to determine the transit of the sports equipment or the moving object through the detection plane 22. The moving object or sports equipment of Fig. 10 comprises three pairwise perpendicular antenna loops 14a to 14c which are connected in series with a resonator 16 having a resonance frequency corresponding essentially to the frequency of an exciting electromagnetic field 10. According to some embodiments, the resonance frequency is within the range of 10 kHz to 300 kHz or, preferably, in the range of 30 kHz to 200 kHz, such as to use electromagnetic fields not being disturbed by the presence of human beings, animals or other living creatures so that a reliable detection of a goal may be performed, even when the area of the goal is crowded with soccer players or other people.

Although primarily illustrated and explained with respect to the detection of goals in a soccer match, further embodiments of the present invention may be utilized in any other scenario where it is desirable to detect the transit of a movable object or of any kind of object through a particular detection plane. This may, for example, be any other kind of sports game, such as for example, handball, American football, polo, cricket, hockey, ice hockey or the like. Furthermore, embodiments may be utilized to track the transportation of movable goods within a warehouse or the like. In another implementation, embodiments of antenna systems may be utilized to detect the crossing of joggers or cyclists or other competitors at the start line of a mass sports event or the like.

Functional blocks denoted as "means for ..." (performing a certain function) shall be understood as functional blocks comprising circuitry that is adapted for performing a certain function, respectively. Hence, a "means for s.th." may as well be understood as a "means being adapted or operable for s.th.". A means being adapted for performing a certain function does, hence, not imply that such means necessarily is performing said function (at a given time instant).

## Claims

1. An antenna system (2a-d) for determining the transit of a moving object (11) through an area of interest within a detection plane (22), the moving object (11) emitting a magnetic field (12), the antenna system (2a-d) comprising:
at least one loop antenna (4a-4d) for receiving the electromagnetic field (12), the at least one loop antenna arranged only within an antenna plane, the antenna plane being perpendicular to the detection plane (22), wherein the at least one loop antenna comprises a first signal path (30a) and a second signal path (30b) symmetrical to the detection plane, the first and second signal paths splitting at a first terminal (26a) and summing up at second terminal (26b), the first signal path (30a) comprising a first conductor segment extending in parallel to the detection plane (22) and the second signal path (30b) comprises a second conductor segment extending in parallel to the detection plane (22);
a ground loop signal path (8) connected to the terminals of the at least one loop antenna (4a-d) such as to close a conductive loop (8) enclosing the detection plane (22) to generate an exciting electromagnetic field (10),
wherein an excitation signal (28) in the conductive loop (8) is split at the first terminal (26a) and summed up at the second terminal (26b) to use the first signal path (30a) and the second signal path (30b) of the at least one loop antenna (4a-4c) for the generation of the exciting electromagnetic field, wherein the exciting electromagnetic field (10) is configured to excite the moving object (11) to the emission of the magnetic field (12); wherein
the first terminal (26a) is situated between a first coil (64a) being part of the first signal path (30a) and a second coil (64b) being part of the second signal path (30b), the first coil (64a) and the second coil (64b) having windings of opposite orientation; wherein
a transformer (62) comprising said first coil (64a) and said second coil (64b) further comprises a third coil (66) coupled to the first coil (64a) and the second coil (64b) such that essentially no current is induced in the third coil (66) when a current through the first coil (64a) and the second coil (64b) is essentially equal; and further comprising
a signal terminal (60) comprising a first signal terminal (60a) coupled to a first side of the third coil (66) and a second signal terminal (60b) coupled a different second side of the third coil (66) for providing a receive signal (44a, 44b), the receive signal (44a, 44b) comprising information on a position of the moving object (11).

2. The antenna system (2a-d) of claim 1, wherein the first signal path (30a) and the second signal path (30b) are arranged on different sides of the detection plane (22) and with essentially identical distance to said detection plane (22).

3. The antenna system (2a-d) of claim 1 or 2, wherein the first signal path (30a) and the second signal path (30b) are configured such that the excitation signal (28) propagates from the first terminal (26a) to the second terminal (26b) via the first signal path (30a) and the second signal path (30b) simultaneously and in phase.

4. The antenna system (2a-d) of any of the preceding claims, further comprising a compensation signal generator coupled to the loop antenna (4c), wherein the compensation signal generator is operable to compensate differing currents in the first signal path (30a) and in the second signal path (30b) such that the currents in the first signal path (30a) and in the second signal path (30b) become essentially equal.

5. The antenna system (2a-d) of claim 4, wherein the compensation signal generator comprises a compensation signal path (32) with adjustable coupling characteristics, the compensation signal path coupled (32) to one signal path of the first signal path (30a) and the second signal path (30b).

6. The antenna system (2a-d) of any of the preceding claims, further comprising a calibration signal generator (69) operable to modify the characteristics of the antenna system (2a-d) such that a signal is generated at the signal terminal (60).

7. The antenna system (2a-d) of claim 6, wherein the calibration signal generator (69) comprises a calibration circuit, the calibration circuit being coupleable to the first signal path (30a) or the second signal path (30b) such that a characteristic of the respective signal path is altered.

8. The antenna system (2a-d) of any of the preceding claims, further comprising a signal evaluator (68) coupled to signal terminal (60) of the antenna system (2a-d), the signal evaluator (68) being operable to determine a signal indicative of the moving object (11) passing through the area of interest when a phase condition of the receive signal (44a, 44b) received at the signal terminal (60) changes according to a predetermined condition.

9. The antenna system (2a-d) of claim 8, wherein the predetermined condition is a phase change of the receive signal (44a, 44b) from positive phase terms to negative phase terms or vice versa.

10. The antenna system (2a-d) of any of the preceding claims, further comprising a mounting structure (24) adapted to mount the antenna system (2a-d) to a support structure (18) such, that the detection plane (22) has a predetermined distance to a predetermined position at the support structure (18).

11. The antenna system (2a-d) of any of the preceding claims, wherein the excitation signal (28) has a frequency from the range of 10kHz to 300kHz or from the range of 30kHz to 200kHz.

12. Soccer goal having coupled thereto at least one of the antenna systems of any of the preceding claims at a predetermined distance to a goal line.

## Patentansprüche

1. Ein Antennensystem (2a-d) zum Bestimmen des Durchgangs eines sich bewegenden Objekts (11) durch einen interessierenden Bereich innerhalb einer Detektionsebene (22), wobei das sich bewegende Objekt (11) ein Magnetfeld (12) emittiert, das Antennensystem (2a-d) umfassend:
zumindest eine Schleifenantenne (4a-4d) zum Empfangen des elektromagnetischen Feldes (12), wobei die zumindest eine Schleifenantenne nur innerhalb einer Antennenebene angeordnet ist, wobei die Antennenebene senkrecht zu der Detektionsebene (22) ist, wobei die zumindest eine Schleifenantenne einen ersten Signalpfad (30a) und einen zweiten Signalpfad (30b) symmetrisch zu der Detektionsebene umfasst, wobei der erste und zweite Signalpfad an einem ersten Anschluss (26a) aufgeteilt und an einem zweiten Anschluss (26b) summiert werden, wobei der erste Signalpfad (30a) ein erstes Leitersegment, das sich parallel zu der Detektionsebene (22) erstreckt, umfasst, und der zweite Signalpfad (30b) ein zweites Leitersegment, das sich parallel zu der Detektionsebene (22) erstreckt, umfasst;
einen Masseschleifen-Signalpfad (8), der mit den Anschlüssen der zumindest einen Schleifenantenne (4a-d) verbunden ist, um eine die Detektionsebene (22) umgebende, leitfähige Schleife (8) zu schließen, um ein erregendes elektromagnetisches Feld (10) zu erzeugen,
wobei ein Erregungssignal (28) in der leitfähigen Schleife (8) an dem ersten Anschluss (26a) aufgeteilt und an dem zweiten Anschluss (26b) summiert wird, um den ersten Signalpfad (30a) und den zweiten Signalpfad (30b) der zumindest einen Schleifenantenne (4a-4c) für die Erzeugung des erregenden elektromagnetischen Feldes zu verwenden, wobei das erregende elektromagnetische Feld (10) ausgebildet ist, um das sich bewegende Objekt (11) zu der Emission des Magnetfeldes (12) zu erregen; wobei
sich der erste Anschluss (26a) zwischen einer ersten Spule (64a), die Teil des ersten Signalpfads (30a) ist, und einer zweiten Spule (64b), die Teil des zweiten Signalpfads (30b) ist, befindet, wobei die erste Spule (64a) und die zweite Spule (64b) Windungen von entgegengesetzter Orientierung aufweisen; wobei
ein Transformator (62), der besagte erste Spule (64a) und besagte zweite Spule (64b) umfasst, ferner eine dritte Spule (66) umfasst, die mit der ersten Spule (64a) und der zweiten Spule (64b) gekoppelt ist, derart, dass im Wesentlichen kein Strom in die dritte Spule (66) induziert wird, wenn ein Strom durch die erste Spule (64a) und die zweite Spule (64b) im Wesentlichen gleich ist; und ferner umfassend
einen Signalanschluss (60), umfassend einen ersten Signalanschluss (60a), der mit einer ersten Seite der dritten Spule (66) gekoppelt ist, und einen zweiten Signalanschluss (60b), der mit einer unterschiedlichen zweiten Seite der dritten Spule (66) gekoppelt ist, zum Bereitstellen eines Empfangssignals (44a, 44b), wobei das Empfangssignal (44a, 44b) Information über eine Position des sich bewegenden Objekts (11) umfasst.

2. Das Antennensystem (2a-d) gemäß Anspruch 1, wobei der erste Signalpfad (30a) und der zweite Signalpfad (30b) auf unterschiedlichen Seiten der Detektionsebene (22) und mit im Wesentlichen identischer Distanz zu besagter Detektionsebene (22) angeordnet sind.

3. Das Antennensystem (2a-d) gemäß Anspruch 1 oder 2, wobei der erste Signalpfad (30a) und der zweite Signalpfad (30b) ausgebildet sind, derart, dass sich das Erregungssignal (28) von dem ersten Anschluss (26a) zu dem zweiten Anschluss (26b) über den ersten Signalpfad (30a) und den zweiten Signalpfad (30b), gleichzeitig oder in Phase, ausbreitet.

4. Das Antennensystem (2a-d) gemäß einem der vorangehenden Ansprüche, ferner umfassend einen Kompensationssignalgenerator, der mit der Schleifenantenne (4c) gekoppelt ist, wobei der Kompensationssignalgenerator wirksam ist, um sich unterscheidende Ströme in dem ersten Signalpfad (30a) und in dem zweiten Signalpfad (30b) zu kompensieren, derart, dass die Ströme in dem ersten Signalpfad (30a) und in dem zweiten Signalpfad (30b) im Wesentlichen gleich werden.

5. Das Antennensystem (2a-d) gemäß Anspruch 4, wobei der Kompensationssignalgenerator einen Kompensationssignalpfad (32) mit anpassbaren Kopplungscharakteristika umfasst, wobei der Kompensationssignalpfad (32) mit einem Signalpfad des ersten Signalpfads (30a) und des zweiten Signalpfads (30b) gekoppelt ist.

6. Das Antennensystem (2a-d) gemäß einem der vorangehenden Ansprüche, ferner umfassend einen Kalibriersignalgenerator (69), der wirksam ist, um die Charakteristika des Antennensystems (2a-d) zu modifizieren, derart, dass ein Signal an dem Signalanschluss (60) erzeugt wird.

7. Das Antennensystem (2a-d) gemäß Anspruch 6, wobei der Kalibriersignalgenerator (69) eine Kalibrierschaltung umfasst, wobei die Kalibrierschaltung mit dem ersten Signalpfad (30a) oder dem zweiten Signalpfad (30b) koppelbar ist, derart, dass eine Charakteristik des jeweiligen Signalpfads abgeändert wird.

8. Das Antennensystem (2a-d) gemäß einem der vorangehenden Ansprüche, ferner umfassend einen Signalbewerter (68), der mit dem Signalanschluss (60) des Antennensystems (2a-d) gekoppelt ist, wobei der Signalbewerter (68) wirksam ist, um ein Signal zu bestimmen, das das sich bewegende Objekt (11) anzeigt, das den interessierenden Bereich passiert, wenn sich eine Phasenbedingung des Empfangssignals (44a, 44b), das an dem Signalanschluss (60) empfangen wird, gemäß einer vorbestimmten Bedingung ändert.

9. Das Antennensystem (2a-d) gemäß Anspruch 8, wobei die vorbestimmte Bedingung eine Phasenänderung des Empfangssignals (44a, 44b) von positiven Phasentermen zu negativen Phasentermen, oder umgekehrt, ist.

10. Das Antennensystem (2a-d) gemäß einem der vorangehenden Ansprüche, ferner umfassend eine Befestigungsstruktur (24), die adaptiert wird, um das Antennensystem (2a-d) an einer Trägerstruktur (18) zu befestigen, derart, dass die Detektionsebene (22) eine vorbestimmte Distanz zu einer vorbestimmten Position an der Trägerstruktur (18) aufweist.

11. Das Antennensystem (2a-d) gemäß einem der vorangehenden Ansprüche, wobei das Erregungssignal (28) eine Frequenz von dem Bereich von 10 kHz bis 300 kHz oder von dem Bereich von 30 kHz bis 200 kHz aufweist.

12. Ein Fußballtor, an das zumindest eines der Antennensysteme gemäß einem der vorangehenden Ansprüche in einer vorbestimmten Distanz zu einer Torlinie gekoppelt ist.

## Revendications

1. Système d'antenne (2a-d) pour déterminer le transit d'un objet mobile (11) à travers une zone d'intérêt dans un plan de détection (22), l'objet mobile (11) émettant un champ magnétique (12), le système d'antenne (2a-d) comprenant :
au moins une antenne cadre (4a-4d) pour recevoir le champ électromagnétique (12), la au moins une antenne cadre disposée uniquement dans un plan d'antenne, le plan d'antenne étant perpendiculaire au plan de détection (22), dans lequel la au moins une antenne cadre comprend un premier trajet de signal (30a) et un second trajet de signal (30b) étant symétrique au plan de détection, les premier et second trajets de signal étant divisés à une première borne (26a) et étant additionnés à une seconde borne (26b), le premier trajet de signal (30a) comprenant un premier segment de conducteur s'étendant en parallèle au plan de détection (22) et le second trajet de signal (30b) comprend un second segment de conducteur s'étendant en parallèle au plan de détection (22);
un trajet de signal en boucle de terre (8) connecté aux bornes de la au moins une antenne cadre (4a-d) de manière à fermer une boucle conductrice (8) entourant le plan de détection (22) pour générer un champ électromagnétique excitateur (10),
dans lequel un signal d'excitation (28) dans la boucle conductrice (8) est divisé à la première borne (26a) et est additionné à la seconde borne (26b) pour utiliser le premier trajet de signal (30a) et le second trajet de signal (30b) de la au moins une antenne cadre (4a-4c) pour la génération du champ électromagnétique excitateur, dans lequel le champ électromagnétique excitateur (10) est configuré pour exciter l'objet mobile (11) pour émettre le champ magnétique (12) ; dans lequel
la première borne (26a) est située entre une première bobine (64a) faisant partie du premier trajet de signal (30a) et une seconde bobine (64b) faisant partie du second trajet de signal (30b), la première bobine (64a) et la seconde bobine (64b) comportant d'enroulements d'orientation opposée ; dans lequel
un transformateur (62) comprenant ladite première bobine (64a) et ladite seconde bobine (64b) comprend en outre une troisième bobine (66) couplée à la première bobine (64a) et à la seconde bobine (64b) de sorte qu'aucun courant n'est essentiellement induit dans la troisième bobine (66) lorsqu'un courant traversant la première bobine (64a) et la seconde bobine (64b) est essentiellement égal ; et comprenant en outre
une borne de signal (60) comprenant une première borne de signal (60a) couplée à un premier côté de la troisième bobine (66) et une seconde borne de signal (60b) couplée à un autre second côté de la troisième bobine (66) afin de fournir un signal de réception (44a, 44b), le signal de réception (44a, 44b) comprenant des informations sur une position de l'objet mobile (11).

2. Système d'antenne (2a-d) selon la revendication 1, dans lequel le premier trajet de signal (30a) et le second trajet de signal (30b) sont disposés sur différents côtés du plan de détection (22) et avec une distance essentiellement identique audit plan de détection (22).

3. Système d'antenne (2a-d) selon la revendication 1 ou 2, dans lequel le premier trajet de signal (30a) et le second trajet de signal (30b) sont configurés de sorte que le signal d'excitation (28) se propage de la première borne (26a) à la seconde borne (26b) par le premier trajet de signal (30a) et le second trajet de signal (30b) simultanément et en phase.

4. Système d'antenne (2a-d) selon l'une des revendications précédentes, comprenant en outre un générateur de signal de compensation couplé à l'antenne cadre (4c), dans lequel le générateur de signal de compensation peut fonctionner pour compenser des courants différents dans le premier trajet de signal (30a) et dans le second trajet de signal (30b) de telle sorte que les courants dans le premier trajet de signal (30a) et dans le second trajet de signal (30b) deviennent essentiellement égaux.

5. Système d'antenne (2a-d) selon revendication 4, dans lequel le générateur de signal de compensation comprend un trajet de signal de compensation (32) avec des caractéristiques de couplage réglables, le trajet de signal de compensation (32) étant couplé à un trajet de signal du premier trajet de signal (30a) et du second trajet de signal (30b).

6. Système d'antenne (2a-d) selon l'une des revendications précédentes, comprenant en outre un générateur de signal d'étalonnage (69) pouvant fonctionner pour modifier les caractéristiques du système d'antenne (2a-d) de sorte qu'un signal est généré à la borne de signal (60).

7. Système d'antenne (2a-d) de la revendication 6, dans lequel le générateur de signal d'étalonnage (69) comprend un circuit d'étalonnage, le circuit d'étalonnage pouvant être couplé au premier trajet de signal (30a) ou au second trajet de signal (30b) de sorte qu'une caractéristique du trajet de signal respectif est modifiée.

8. Système d'antenne (2a-d) selon l'une des revendications précédentes, comprenant en outre un évaluateur de signal (68) couplé à la borne de signal (60) du système d'antenne (2a-d), l'évaluateur de signal (68) pouvant fonctionner pour déterminer un signal indiquant l'objet mobile (11) traversant la zone d'intérêt lorsqu'une condition de phase du signal de réception (44a, 44b) reçu à la borne de signal (60) change en fonction d'une condition prédéterminée.

9. Système d'antenne (2a-d) selon la revendication 8, dans lequel la condition prédéterminée est un changement de phase du signal de réception (44a, 44b) des termes de phase positifs aux termes de phase négatifs ou vice versa.

10. Système d'antenne (2a-d) selon l'une des revendications précédentes, comprenant en outre une structure de montage (24) adaptée pour monter le système d'antenne (2a-d) sur une structure de support (18) telle que le plan de détection (22) a une distance prédéterminée à une position prédéterminée au niveau de la structure de support (18).

11. Système d'antenne (2a-d) selon l'une des revendications précédentes, dans lequel le signal d'excitation (28) a une fréquence qui se situe dans la plage de 10 kHz à 300 kHz ou dans la plage de 30 kHz à 200 kHz.

12. But de football auquel est couplé au moins l'un des systèmes d'antennes selon l'une des revendications précédentes à une distance prédéterminée d'une ligne de but.
